Europäisches Patentamt

(19) European Patent Office

Office européen des brevets

(11) Publication number: **0 078 713**
**B1**

(12) **EUROPEAN PATENT SPECIFICATION**

(45) Date of publication of patent specification: **18.01.89**

(21) Application number: **82305838.3**

(22) Date of filing: **03.11.82**

(51) Int. Cl.⁴: **B 64 B 1/00**

(54) **Aircraft having buoyancy gas balloon.**

(30) Priority: **04.11.81 US 318248**

(43) Date of publication of application:
**11.05.83 Bulletin 83/19**

(45) Publication of the grant of the patent:
**18.01.89 Bulletin 89/03**

(84) Designated Contracting States:
**CH DE FR GB IT LI SE**

(56) References cited:
**FR-A- 482 466**
**GB-A-2 030 098**
**US-A-1 905 345**

(73) Proprietor: **Ferguson, Frederick**
**200 First Avenue**
**Ottawa Ontario (CA)**

(72) Inventor: **Ferguson, Frederick**
**200 First Avenue**
**Ottawa Ontario (CA)**

(74) Representative: **Fisher, Bernard et al**
**Raworth, Moss & Cook 36 Sydenham Road**
**Croydon Surrey CR0 2EF (GB)**

Courier Press, Leamington Spa, England.

**Description**

This invention relates to an aircraft, or airship, in which the major part of the lift is provided by a buoyant gas such as helium. This invention is an improvement on the aircraft described in EP—A—0023843 which discloses the features of the first part of Claim 1.

The aforesaid application described an aircraft using a so-called "super-pressure" balloon which is a generally spherical balloon having essentially fixed dimensions and shape when inflated, and which contains the buoyant gas (normally helium) at a pressure sufficiently high that the shape and size of the balloon is substantially unaffected by normal changes in atmospheric pressure and temperature, even when the balloon has little or no internal supporting structure. Further details concerning the nature of super-pressure balloons and the pressures intended for use in such balloons as used in this invention will be found in the aforesaid application.

As described in the aforesaid application the aircraft further comprises:—

A rigid load support yoke including two arms extending upwardly from a central gondola and each with an upper end,

means rotatably connecting the upper ends of said arms to the balloon in such manner as to allow the balloon to rotate about a normally horizontal axis passing through the centre of the balloon,

means for propelling the aircraft through the air in a forward direction transverse to said axis, and

means for rotating the balloon about said horizontal axis in such direction that the surface of the balloon facing said forward direction moves upwards relative to the centre of the balloon.

Rotation of the balloon contributes to the lift by virtue of the Magnus effect, which becomes effective when the aircraft is moving forward; for initial lift-off engine thrust may augment the static lift.

An aircraft having the features described above will hereinafter be referred to as an aircraft "of the type described".

The airship described in the aforesaid application had arms and a gondola of airfoil shape, and the arms were curved lengthwise to conform to the shape of the balloon and to position the gondola so that the distance separating the bottom of the balloon from the top of the gondola was less than 1/10 of the balloon radius; this provides good manouverability of the craft as compared to standard balloon construction using cables. The top of the gondola was curved in the longitudinal direction to follow the curve of the balloon down to the fore-and-aft centreline of the craft, beyond which the surface sloped downwards.

According to the present invention, there is provided an aircraft comprising a generally spherical superpressure balloon for containing a bouyant gas and having substantially fixed dimensions and shape when inflated, a rigid load support yoke including two arms extending upwardly from a central gondola and each with an upper end, means rotatably connectng the upper ends of said arms to the balloon in such a manner as to allow the balloon to rotate about a normally horizontal axis passing through the centre of the balloon, means for propelling the aircraft through the air in a forward direction transverse to said axis, and means for rotating the balloon about said horizontal axis in such direction that the surface of the balloon facing said forward direction moves upwards relative to the centre of the balloon; said means connecting the upper ends of the arms to the balloon include two end plates each attached to a side of the balloon and centred on said axis, and there being two ballonets located inside the balloon, each ballonet being adjacent one end plate and being formed of flexible material, each said ballonet being arranged to be supplied with air from an independent source of pressurized air whereby said ballonets may be used both to alter the buoyancy of the aircraft and to trim the craft laterally, characterised in that each ballonet has a periphery sealed around the periphery of a said end plate so as to assume a roughly hemispherical shape when inflated.

A portion, and preferably a major portion of the gondola upper surface may be situated less than 12 inches (30.5 cm) from the closest parts of the balloon surface. This distance will normally be less than 2% of the balloon radius and may be about 1% for a large balloon (say 160 ft. or 50 m. dia.). The restriction of flow between the balloon and the gondola reduces drag since air which would otherwise flow under the forwardly moving bottom surface of the balloon is deflected under the relatively smooth bottom surface of the gondola.

This invention will be described in more detail with reference to the accompanying drawings, in which:—

Figure 1 is a side elevation of an aircraft of this invention,

Figure 2 is a frontal elevation of the aircraft of Figure 1,

Figure 3 is a view of the underside of the same aircraft, and

Figures 4, 5 and 6 are views of a model of the aicraft used in wind tunnel tests.

The main components of the aircraft or airship are as described in my aforesaid application, and are as follows:—

a spherical superpressure balloon 10 having circumferential cables 12a;

a rigid load supporting yoke including two arms 32 extending upward from a central gondola 36, shafts 30 rotatably connecting the upper ends of these arms to the balloon to allow the balloon to rotate about normally horizontal axle 16 passing through its centre,

gas turbine engines 40, mounted adjacent the upper ends of the arms, for propelling the aircraft through the air in a forward direction transverse to the axis, and

means, which may be an electric motor mounted at the top of an arm 32, for rotating the balloon in such direction that the surface of the balloon facing the forward direction moves upward relative to the centre of the balloon, thereby generating a lift by the Magnus effect.

The general details of construction, especially in relation to the balloon material, the means for pressurizing the balloon, the internal cabling to maintain the spherical shape of the balloon, the balloon rotation means, the nature of engines 40, and the general form of the gondola 36 and arms 32 which are provided with rudders 41, are all as described in my aforesaid application. However, the airship of this invention has the following modifications as compared to that of my aforesaid application:—

1) The balloon 10 is modified in that in addition to the circumferential cables 12a, additional cables 12b are provided defining a series of squares over the surface of the balloon. The balloon material bulges slightly between the cables to give a pillowed effect. The size of the irregularities is similar (proportionally to the balloon size) to the dimples of a golf ball, and the effect is intended to be similar to a golf ball in enhancing the Magnus effect and reducing drag.

2) Instead of a single central ballonnet which in accordance with my aforesaid application was supported in the centre of the balloon by an axle, two ballonets 24 are used each located at one end of the rotational axis of the balloon. Large end plates 14 are provided to which are attached the ends of cables 12a, and the flexible material of the ballonets 24 is connected and sealed around the periphery of each of the plates. When deflated the ballonet material lies in contact with or close to the adjacent end plate, and when inflated the ballonets assume a roughly hemispherical shape. Air is supplied to the ballonets through tubes which pass up arms 32 and enter the balloon co-axially of shafts 30, each ballonet being supplied by an independent compressor so that the amount of air in the ballonets can be regulated independently to assist trimming the craft. Since the central axle 16 has no ballonet to support, it may be of quite light construction, suitable merely for resisting axial loads.

3) The gondola 36 has its upper surface conforming very closely with the adjacent surface of the balloon; a major portion of the gondola upper surface may be situated less than 12 (30.5 cm) inches or less than about 2% of the balloon radius from the outermost extremities of the balloon surface. A preferred spacing from the balloon surface outer extremities would be about 1% of the balloon radius or about 25 cm for a balloon of 50 metres radius. The blanking effect is enhanced by providing not only a concave curvature to a front portion of the gondola top which lies in front of the axle 116, but also to a lesser portion of the rear of the gondola top lying behind the axle 16 so that both portions conform closely to the balloon curvature. By restricting the airflow between the balloon and the gondola, this tends to reduce the drag which would otherwise occur by reason of the roughened bottom surface of the balloon moving forward at perhaps twice the overall speed of the airship. In other words a substantial part of the lower surface of the balloon is blanked off or masked by the gondola and as the airship moves forward air is deflected largely underneath the gondola which offers less resistance to flow than the underside of the balloon. The blanking effect continues to the side margins of the gondola since the gondola top surface is concave laterally as well as longitudinally, and the blanking effect also continues at the lower portions of arms 32 which are wide in the fore-and-aft direction and are also concave internally laterally as well as lengthwise for a major part of their length.

4) The engines 40 are mounted adjacent the upper ends of arms 32 but are situated below the rotational axis of the balloon by an amount equivalent to say 1/5 of the balloon radius, and are at least close to being aligned with the centre of gravity of the whole airship. This positioning of the engines counteracts slight backwards sway of the gondola which will occur upon forwards acceleration with the engines aligned with the balloon axis as in my aforesaid application.

5) Additional control surfaces are provided in the form of thrust deflectors 50 located behind the engines.

The amount of Magnus lift will depend on the forward speed of the airshift, rotational speed of the balloon, and surface roughness of the balloon. The following table gives calculated figures approximating what would be the optimum flying conditions for three models of airship of the design illustrated herein, and having balloons rspectively of 72, 160 and 200 ft. (22, 49 and 61 metres respectively):—

| Model designation | 72P | 160P | 200P |
|---|---|---|---|
| Sphere diameter (ft) | 72 | 160 | 200 |
| (Sphere diameter—metres) | (22) | (49) | (61) |
| Total sphere volume (cu ft) | 195,500 | 2,144,500 | 4,188,800 |
| (Total sphere volume cu metres) | (5,530) | (60,700) | (118,500) |
| Total static lift (lb) | 12,900 | 140,600 | 274,000 |
| (Total static lift Kg) | (5,860) | (63,800) | (124,000) |
| Net weight (lb) (without fuel) | 7,000 | 45,600 | 99,000 |
| (Net weight Kg) (without fuel) | (3,170) | (20,700) | (45,000) |
| Net static lift (lb) | 5,900 | 95,000 | 175,000 |
| (Net static lift Kg) | (2,680) | (43,100) | (79,500) |
| Max. Magnus lift (lb) | 6,000 | 30,000 | 40,000 |
| (Max. Magnus lift Kg) | (2,720) | (13,600) | (18,200) |
| Fuel load (lb) | 2,400 | 40,000 | 55,000 |
| (Fuel load Kg) | (1,090) | (18,200) | (25,000) |
| Net disposable static lift (lb) | 3,500 | 55,000 | 120,000 |
| (Net disposable static lift Kg) | (1,590) | (25,000) | (54,500) |
| Net Maximum disposable lift (lb) | 9,500 | 85,000 | 160,000 |
| (Net Maximum disposable lift Kg) | (4,310) | (38,600) | (72,500) |
| Max. airspeed (mph) | 60 | 60 | 60 |
| (Max. airspeed Kmph) | (100) | (100) | (100) |

It may be noted that the figures for Magnus lift are very approximate pending large scale experiments.

It will be seen that Magnus lift can contribute substantially to the net maximum disposable lift, especially in smaller sizes of the airship. As size increases the total static lift increases with the cube of the balloon diameter whereas Magnus lift depends on the square of the balloon diameter so that relative amount of Magnus lift diminishes. However in the 160 ft. (49 metre) diameter model the Magnus lift is still more than 40% the net disposable static lift. Even in the 200 ft. (61 metre) dia. model the Magnus lift will still be about 30% of the net disposable static lift and certainly over 25%. Since the Magnus lift depends on speed as well as rotation, in order to take off with a load greater than the net disposable static lift either the airship must be made to move along a runway, or engine thrust must be used to augment static lift; the latter alternative is preferred since the ability to hover is considered important. It is anticipated that during take-off the engines will be orientated so that at least 60% of total engine thrust will be directed downwards. to augment the static lift during take-off, and the engines will then be inclined to the horizontal position to propel the airship in the forward direction while the balloon is rotated to supply the Magnus lift. Once cruising speed has been reached, the engines will be used primarily only for forward movement.

In order for the Magnus effect to contribute substantially to the payload, the engines should be capable of developing downwardly directed thrust which is at least 25% and preferably at least 40% of the net disposable static lift; and the balloon surface characteristics and the means for rotating the balloon will be such that at cruising speed the Magnus lift will also be greater than respectively 25% or 40% of the net maximum disposable lift.

The cabling pattern on the balloon may be more complex, and may, for example, give triangular pillowed areas. For this purpose the cables may be arranged in a pattern similar to that of a geodesic dome, or the cabling may be similar to a spherical icosahedron.

Also, the blanking effect which is described above may be increased by having arms 32 extended rearwardly and conforming closely to the surface of the balloon.

If the gap between the balloon and the gondola upper surface is very small, air entrained by the surface irregularities of the balloon may be drawn forward through the gap between the balloon and the gondola. If the gap is relatively large, air will flow rearwards under the balloon. It is considered preferable that the gap be at an intermediate dimension so that there is a minimum of air flow between the balloon amd the gondola.

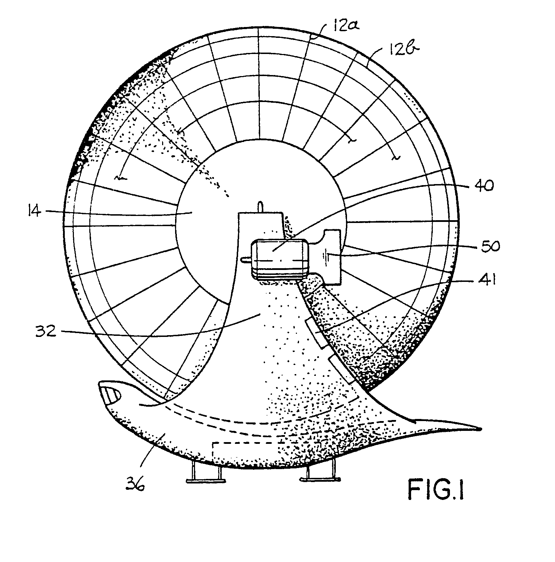

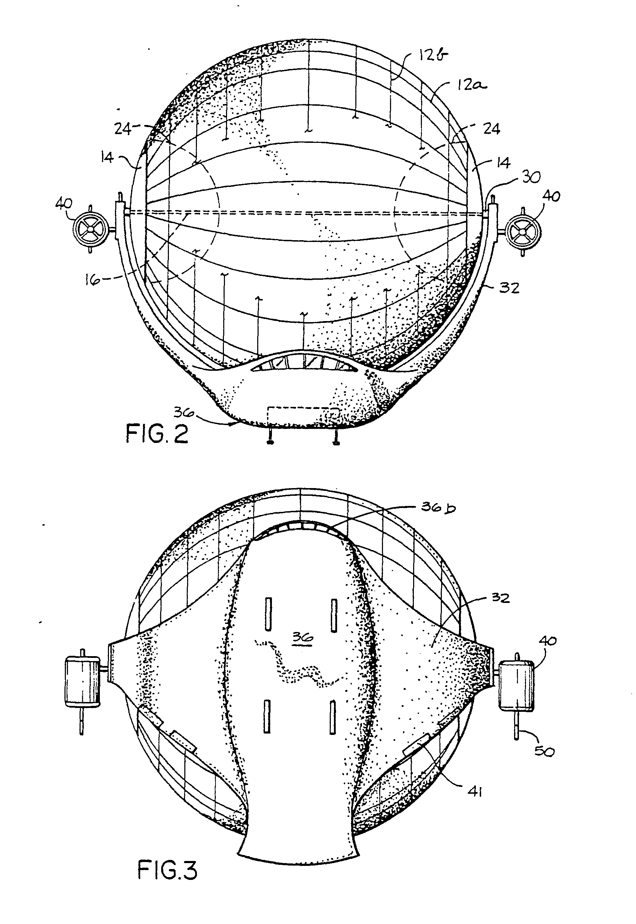

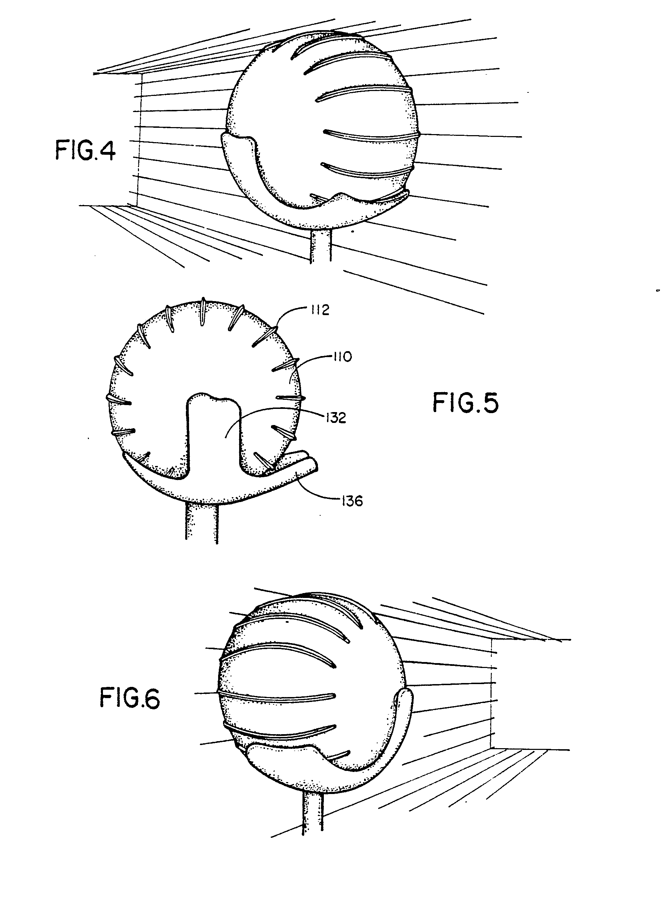

Wind tunnel tests have been carried out on a model of the airship illustrated in Figures 4 to 6. The model used a sphere 110 of 12 inches (30.5 cm) having sixteen paddles 112 each 1/4 inch (6 mm) depth, extending over an arc of 90°, and providing surface roughness simulating that produced by cabling in the airship. The gondola 136 of the model was shaped similar to that shown in Figures 1 to 3, except in having less depth and in having straight sided arms 132. The gondola was spaced from the sphere just enough to clear the paddles, the clearance space being less than 1% of the sphere radius.

The following table shows results for the lift coefficient and drag coefficient $C_L$ and $C_D$, these quantities being such as satisfy the formulae:

Lifting force $= 1/2\ C_L \rho\ SV^2$
Drag force $= 1/2\ C_D\ \rho\ SV^2$

where

$\rho$ is the density of air
S is the frontal area of the sphere (only) and

V is air speed.

Since the tests were intended to show the effect of various gondola designs on the lift and drag of a particular sphere, the quantity S does not include the gondola area.

The tests were made at various spin rates, given as

$$\frac{wd}{u},$$

where

w is angular velocity, radius/sec;
d is sphere dia,
u is airspeed

The results of the following table show that, with the masking effect produced by the gondola, drag can be reduced while lift is increased as the rotation speed of the sphere is increased.

TABLE

| $\dfrac{wd}{u}$ | $C_L$ | $C_D$ |
|------|-------|-------|
| 0.0 | −0.18 | 0.45 |
| 0.5 | 0.12 | 0.40 |
| 1.0 | 0.13 | 0.37 |
| 1.5 | 0.13 | 0.38 |
| 2.0 | 0.15 | 0.38 |
| 2.5 | 0.13 | 0.37 |
| 3.0 | 0.14 | 0.35 |
| 3.5 | 0.15 | 0.34 |
| 4.0 | 0.17 | 0.31 |

## Claims

1. An aircraft comprising a generally spherical superpressure balloon (10) for containing a buoyant gas and having substantially fixed dimensions and shape when inflated, a rigid load support yoke including two arms (32) extending upwardly from a central gondola (36) and each with an upper end, means (30) rotatably connecting the upper ends of said arms to the balloon in such a manner as to allow the balloon to rotate about a normally horizontal axis passing through the centre of the balloon, means (40) for propelling the aircraft through the air in a forward direction transverse to said axis, and means for rotating the balloon about said horizontal axis in such direction that the surface of the balloon facing said forward direction moves upwards relative to the centre of the balloon; said means connecting the upper ends of the arms to the balloon include two end plates (14) each attached to a side of the balloon and centred on said axis, and there being two ballonets (24) located inside the balloon, each ballonet being adjacent one end plate (14) and being formed of flexible material, each said ballonet being arranged to be supplied with air from an independent source of pressurised air whereby said ballonets may be used both to alter the buoyancy of the aircraft and to trim the craft laterally, characterised in that each ballonet has a periphery sealed around the periphery of a said end plate (14) so as to assume a roughly hemispherical shape when inflated.

5

# EP 0 078 713 B1

2. An aircraft according to Claim 1, characterised in that said gondola (36) has a portion of its upper surface concavely shaped to conform to the balloon surface both laterally and longitudinally and spaced from said balloon surface by an amount small enough to restrict flow of air between the gondola and the balloon when the aircraft is moving in the forward direction.

3. An aircraft according to Claim 2, characterised in that said concavely curved portion is a major portion of the upper surface of the gondola (36).

4. An aircraft according to Claim 2 or 3, characterised in that said portion is spaced from the closest parts of the balloon surface by an amount less than 2% of the balloon radius.

5. An aircraft according to Claim 2 or 3, characterised in that said portion is spaced from the closest parts of the balloon surface by an amount less than about 1% of the balloon radius.

6. An aircraft according to Claim 2 or 3, characterised in that said portion is spaced from the closest parts of the balloon surface by an amount less than 12 inches (30.5 cm).

7. An aircraft according to any one of the preceding claims, characterised in that said gondola (36) includes a rear portion lying normally behind said horizontal axis and which curves upwardly from the longitudinal centre of the balloon to conform to the balloon surface.

8. An aircraft according to any one of the preceding claims, characterised in that a major portion of adjacent parts of said arms (32) are concave both laterally and longitudinally to conform to the balloon surface.

9. An aircraft according to any one of the preceding claims, characterised in that the balloon has a non-smooth surface provided by bulges situated between reinforcing cables (12a, 12b) lying along the balloon surface.

10. An aircraft according to any one of the preceding claims characterised in that said means (40) for propelling said aircraft in a forward direction are engines which are capable of developing downwardly directed thrust which is at least 25% the net disposable static lift, and in that the means for rotating the balloon, and the balloon surface characteristics, are such that in forward flight the balloon generates a Magnus lift equivalent to at least 25% said net disposable static lift.

11. An aircraft according to Claim 10, characterised in that said engines (40) are capable of developing downwardly directed thrust which is at least 40% the net disposable static lift, and wherein the means for rotating the balloon and the balloon surface characteristics, are such that in forward flight the balloon generates a Magnus lift equivalent to at least 40% said net disposable static lift.

12. An airship according to any of the preceding claims, characterised in that means are provided to allow at least 60% of total engine thrust to be directed downwardly to assist in take-off.

**Patentansprüche**

1. Luftfahrzeug, das einen im allgemeinen kugelförmigen Überdruckballon (10) beinhaltet, der mit einem Leicht-Gas gefüllt ist und der feste Abmessungen und Form hat, wenn er gefüllt ist, ein steifer Jochbogen, der zwei Tragarme (32) beinhaltet, die aufwärts von der Zentralgondel (36) jeweils mit einem oberen Ende versehen sind, Mittel (30), die die oberen Enden der besagten Tragarme drehbar mit dem Ballon in der Art verbinden, daß der Ballon um eine normalerweise horizontale Achse rotieren kann, die durch das Zentrum des Ballons geht, Mittel (40), die das Luftfahrzeug in Vorwärts-Richtung antreiben im rechten Winkel zu dieser besagten Achse und Mittel, die den Ballon um die besagte Horizontalachse so rotieren lassen können in solch einer Richtung, daß die Ballonhülle in Bezug auf die beschriebene Vorwärts-Richtung sich relativ dazu gesehen aufwärts zum Ballonzentrum bewegt: die besagten Mittel sind mit den oberen Tragarmenden so an dem Ballon befestigt inclusive zweier Endplatten (14), daß jede an einer Seite des Ballons befestigt ist und zentriert wird durch die besagte Achse, des weiteren sind da zwei Innenballons (24), jeder Innenballon ist benachbart von einer Endplatte (14) und aus flexiblem Material geformt, jeder der besagten Innenballons ist so ausgelegt, daß er unabhängig mit Pressluft versorgt wird, so daß die erwähnten Innenballons beide den Auftrieb des Luftfahrzeuges zu ändern vermögen oder es seitlich trimmen können, dadurch gekennzeichnet,

daß jeder Innenballon einen Außenrand hat, der mit dem Außenrand der besagten Endplatte (14) gasdicht verbunden ist, so daß er ein annähernd halbkugelförmiges Aussehen annehmen kann nach Füllung.

2. Luftfahrzeug in Bezug zu Anspruch 1, dadurch gekennzeichnet,

daß die erwähnte Gondel (36) einen Teil ihres oberen Gehäuses konkav geformt hat, um sich der Ballonoberfläche sowohl in Quer- als auch in Längsrichtung anzupassen, wobei der Abstand von der besagten Ballonhülle so klein ist, um Durchströmen von Luft zwischen der Gondel und dem Ballon einzuschränken, wenn das Luftfahrzeug sich im Geradeausflug befindet.

3. Luftfahrzeug in Bezug zu Anspruch 2, dadurch gekennzeichnet,

daß der besagte konkav-gekrümmte Teil ein Hauptteil des Gondeloberteiles (36) ist.

4. Luftfahrzeug in Bezug zu Anspruch 2 oder 3, dadurch gekennzeichnet,

daß der besagte Teil sich in dem Abstand zu den nächsten Teilen der Ballonhülle befindet, welcher weniger als 2% des Ballonradiusses beträgt.

5. Luftfahrzeug in Bezug zu Anspruch 2 oder 3, dadurch gekennzeichnet,

EP 0 078 713 B1

daß besagter Teil sich in dem Abstand zu den nächsten Teilen der Ballonhülle befindet, welcher weniger als 1% des Ballonhüllen-Radiusses beträgt.

6. Luftfahrzeug in Bezug zu Anspruch 2 oder 3, dadurch gekennzeichnet,

daß besagter Teil in dem Abstand zu den nächsten Teilen der Ballonhülle befindet, welcher weniger als 12 inches (30,5 cm) beträgt.

7. Luftfahrzeug nach jedem der vorstehenden Ansprüche, dadurch gekennzeichnet,

daß besagte Gondel (36) einen rückwertigen Teil besitzt, der normalerweise hinter der zitierten Horizontalachse liegt und der aufwärts gekrümmt ist-vom Längsschnitt durch das Ballonzentrum aus betrachtet-, um sich der Ballonhülle anzunähern.

8. Luftfahrzeug nach jedem der vorstehenden Ansprüche, dadurch gekennzeichnet,

daß angrenzende Hauptteile der erwähnten Tragarme (32) sowohl in Seitwärts- als auch in Längsrichtung konkav zu der Ballonoberfläche geformt sind.

9. Luftfahrzeug nach jedem der vorstehenden Ansprüche, dadurch gekennzeichnet,

daß der Ballon eine nicht-glatte Oberfläche besitzt, die mit Ausbuchtungen versehen ist, die zwischen Verstärkungsseilen entlang der Ballonhülle liegen.

10. Luftfahrzeug nach jedem der vorstehenden Ansprüche, dadurch gekennzeichnet,

daß Mittel (40) für den Geradeausflug Motoren sind, die einen nach unten gerichteten Schub erzeugen, der wenigstens 25% des netto-verfügbaren Gas-Auftriebes ausmacht und in diesen Mittel sind, den Ballon rotieren zu lassen und das die Ballonhülle so gestaltet ist, daß beim Vorwärts-Flug der Ballon einen zusätzlichen Auftrieb erzeugt, der mit wenigstens 25% des verfügbaren Gas-Auftriebes vergleichbar ist.

11. Luftfahrzeug in Bezug zu Anspruch 10, dadurch gekennzeichnet,

daß besagte Maschinen (40) in der Lage sind, bei nach unten gerichtetem Schub wenigstens 40% des netto-verfügbaren Gas-Auftreibes zu erzeugen und worin die Mittel, um den Ballon und seine Hüllenapplikationen rotieren zu lassen, so ausgelegt sind, daß beim Vorwärtsflug der Ballon einen zusätzlichen Auftrieb erzeugt, der wenigstens 40% des verfügbaren Gas-Auftreibes beträgt.

12. Luftfahrzeug nach jedem der vorstehenden Ansprüche, dadurch gekennzeichnet,

daß Mittel vorgesehen sind, die es erlauben, wenigstens 60% des Gesamtschubes nach unten zu richten, um als Starthilfe zu fungieren.

**Revendications**

1. Aéronef comprenant un ballon en surpression de forme générale sphérique (10) conçu de façon à contenir un gaz de flottabilité et présentant une forme et des dimensions sensiblement fixes lorsqu'il est gonflé, un collier rigide de support de charge comportant deux bras (32) s'étendant vers le haut à partir d'une nacelle centrale (36) et comprenant chacun une extrémité supérieure, des moyens reliant à rotation les extrémités supérieures desdits bras au ballon, de manière à permettre à ce dernier de tourner par rapport à une axe normalement horizontal passant par le centre du ballon, des moyens (40) pour assurer la propulsion de l'aéronef dans l'air dans une direction orientée vers l'avant transversalement audit axe et des moyens pour faire tourner le ballon autour dudit axe horizontal dans une direction telle que la surface du ballon en regard de cette direction orientée vers l'avant se déplace vers le haut par rapport au centre du ballon; lesdits moyens reliant les extrémités supérieures des bras au ballon comprennent deux plaques d'extrémités (14) chacun fixée sur un côté du ballon et centrée sur ledit axe et on prévoit deux ballonnets (24) situés à l'intérieur du ballon, chaque ballonnet étant adjacent à une plaque d'extrémité (14) et étant constitué d'un matériau flexible, chacun desdits ballonnets étant disposé de manière à être alimenté en air à partir d'une source indépendante d'air comprimé de manière que lesdits ballonnets puissent être utilisés à la fois pour modifier la flottabilité de l'aéronef et pour faire dériver latéralement l'aéronef, caractérisé en ce que chaque ballonnet présente une périphérie scellée autour de la périphérie de ladite plaque d'extrémité (14) de manière à obtenir une forme grossièrement émisphérique lorsqu'il est gonflé.

2. Aéronef selon la revendication 1, caractérisé en ce que ladite nacelle (36) présente une portion de surface supérieure de forme concave de manière à s'adapter à la forme de la surface du ballon, à la fois latéralement et longitudinalement, et elle est espacée de cette surface de ballon d'une quantité suffisamment faible pour réduire le débit d'air entre la nacelle et le ballon lorsque l'aéronef se déplace vers l'avant.

3. Aéronef selon la revendication 2, caractérisé en ce que ladite portion incurvée de façon concave constitue une partie principale de la surface supérieure de la nacelle (36).

4. Aéronef selon la revendication 2 ou 3, caractérisée en ce que ladite portion est espacée des parties les plus rapprochées de la surface du ballon selon une quantité inférieure à 2% du rayon du ballon.

5. Aéronef selon la revendication 2 ou 3, caractérisé en ce que ladite portion est espacée des parties les plus rapprochées de la surface du ballon selon une quantité inférieure à 1% du rayon du ballon.

6. Aéronef selon l'une des revendications 2 ou 3, caractérisé en ce que ladite portion est espacée des parties les plus rapprochées de la surface du ballon selon une quantité inférieure à 12 pouces (30,5 cm) du rayon du ballon.

7. Aéronef selon l'une quelconque des revendications précédentes, caractérisé en ce que ladite nacelle (36) comporte une portion postérieure située normalement derrière ledit axe horizontal et qui s'incurve vers le haut à partir du centre longitudinal du ballon de manière à se conformer à la surface de ce dernier.

7

8. Aéronef selon l'une quelconque des revendications précédentes, caractérisé en ce qu'une portion principale des parties adjacentes desdits bras (32) sont concaves à la fois latéralement et longitudinalement de manière à se conformer à la surface du ballon.

9. Aéronef selon l'une quelconque des revendications précédentes, caractérisé en ce que le ballon présente une surface non lisse comportant des redans situées entre des câbles de renfort (12a, 12b) positionnées le long de la surface du ballon.

10. Aéronef selon l'une quelconque des revendications précédentes, caractérisé en ce que lesdits moyens (40) pour assurer la propulsion de l'aéronef vers l'avant sont constitués par des moteurs qui peuvent développer une poussée dirigée vers le bas correspondant à au moins 25% de la portance statique nette disponible et en ce que les moyens pour entraîner en rotation le ballon ainsi que les caractéristiques de la surface de ce ballon sont telles que lors d'un vol en translation vers l'avant, le ballon engendre une force de Magnus qui est équivalente à au moins 25% de ladite portance statique nette disponible.

11. Aéronef selon la revendication 10, caractérisé en ce que lesdits moteurs (40) peuvent développer une poussée dirigée vers le bas qui est au moins 40% de la portance statique nette disponible et en ce que les moyens pour assurer la rotation du ballon ainsi qui les caractéristiques de surface de ce ballon sont tels que lors d'un vol en translation vers l'avant, le ballon engendre une force de Magnus équivalente à au moins 40% de ladite portance statique nette disponible.

12. Aéronef selon l'une quelconque des revendications précédentes, caractérisé en ce que des moyens sont prévus afin de permettre de diriger vers le bas au moins 60% de la poussée totale du moteur de manière à aider au décollage.

FIG.I

FIG. 2

FIG.3

2

FIG.4

FIG.5

112

110

132

136

FIG.6